# EUROPEAN PATENT APPLICATION

(11) **EP 1 967 439 A2**
(43) Date of publication of application: **10.09.2008**
(21) Application number: 08152019.9
(22) Date of filing: 27.02.2008
(51) Int. Cl.: B62B 7/08

(54) **Foldable stroller**

(30) Priority: 07.03.2007 IT MI20070459
(71) Applicant: Giochi Preziosi S.p.A., 20123 Milan (IT)
(72) Inventor: Bertè, Dario, 20020, Cogliate MI (IT)
(74) Representative: Simino, Massimo

(57) **Abstract**

A foldable stroller comprising a frame (1) with two opposed side members, each including a rear bar (2) connected to a rear wheel (3), a front bar (4) connected to a front wheel (5) and a connecting bar (6) connected to a handle (7).

Advantageously, the closing motion that turns the stroller from the open state to the closed state occurs by a pivotal motion of the front bar (4) towards the rear bar (2) in a direction of rotation opposite to the direction of rotation of the connecting bar (6) towards the rear bar (2) wherefore, during such closing motion, the front bar (4) and the connecting bar (6) pivot relative to the rear bar (2) to effect an umbrella-like closing motion.

## Description

The present invention relates to a foldable stroller according to the preamble of claim 1, particularly a stroller whose loadbearing structure can be folded lengthwise and preferably but not necessarily also crosswise.

In the art of strollers, the need is strongly felt for simply and quickly foldable structures, to minimize the dimensions of the stroller in its closed state, for easy transportation and storage.

Also, the stroller is required to have a sufficiently sturdy and stiff structure, to accommodate a baby on its seat in a comfortable and protected position. It shall be noted that, while minimal frame strollers have little space requirements in their closed state, they are not appreciated by users due to their inadequate comfort and/or protection features, when used in their primary baby accommodation function.

Strollers with folding features are known in the art, although the solutions provided heretofore are not fully satisfactory in many respects, in that either they aim at reducing the dimensions of the stroller in the folded state in spite of its open-state features or they aim at improving the comfort and safety of the stroller in spite of its closed-state size, particularly in the lengthwise direction.

This invention is based on the issue of providing a foldable stroller that has such structural and functional features as to fulfill the above needs, while obviating the above prior art drawbacks.

This issue is addressed by a foldable stroller according to the features of claim 1.

Further features and advantages of the foldable stroller of this invention will be apparent from the following description of one preferred embodiment thereof, which is given by way of illustration and without limitation with reference to the accompanying figures, in which:
- Figure 1 is a perspective bottom view of the frame of a foldable stroller of the invention in the open state;
- Figure 2 is a perspective back view of frame of the stroller of Figure 1;
- Figure 3 is a simplified side view of the frame of the stroller of Figure 1;
- Figure 4 is a simplified view of the frame of Figure 3 in a partially folded state;
- Figure 5 is a simplified view of the frame of Figure 3 in a fully folded state;
- Figure 6 is a plan view of a detail of the stroller frame structure of Figure 1 in a first operating state;
- Figure 7 is a side view of the detail of Figure 6;
- Figure 8 is a sectional view taken along a line VIII - VIII of Figure 6;
- Figure 9 shows the detail of Figure 6 upon operation of a part thereof;
- Figure 10 is a bottom view of the detail of Figure 9;
- Figure 11 shows the detail of Figure 6 in a second operating configuration;
- Figure 12 is a sectional plan view of a detail of a lock device of the stroller frame of Figure 1 in a locked state;
- Figure 13 shows the lock device of Figure 12 in an unlocked state;
- Figure 14 is an exploded plan and partly sectional view of the lock device of Figure 12 and
- Figure 15 is a perspective view of the frame of a foldable stroller of the invention in the open state, as viewed from the front.

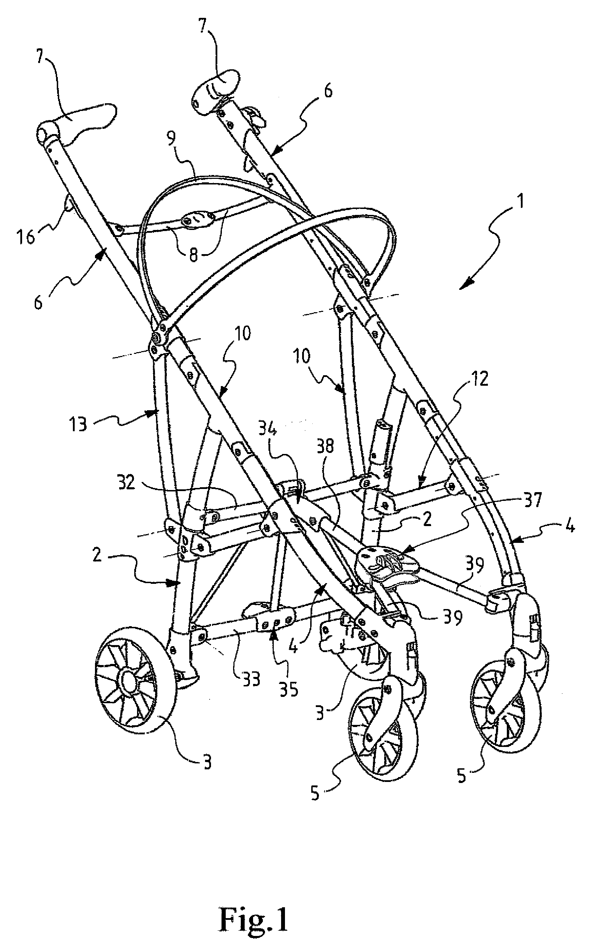

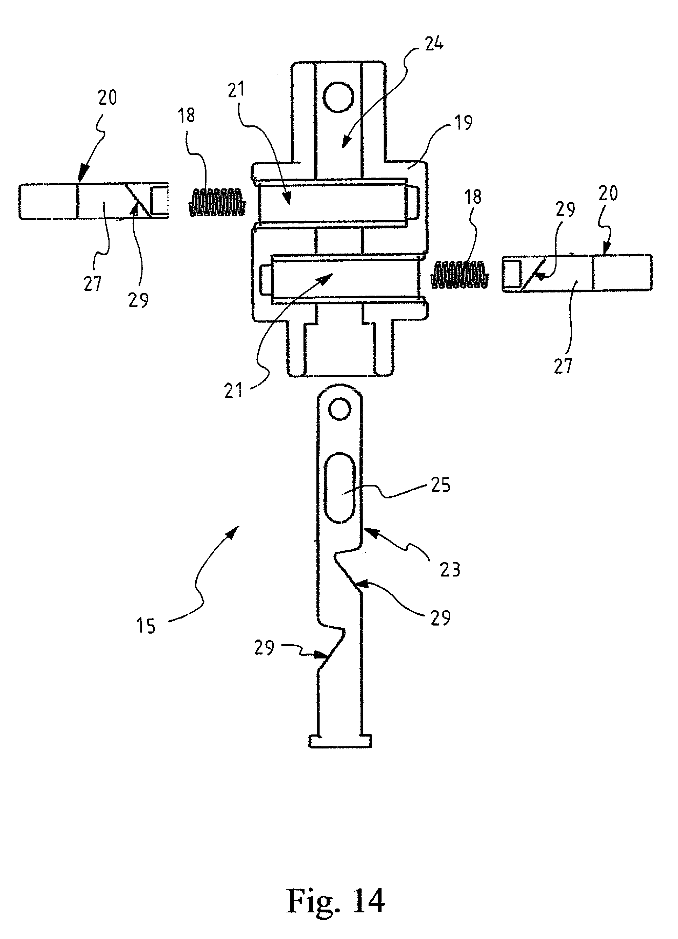

Referring to Figures 1 to 14, numeral 1 generally designates the frame of a foldable stroller of the invention.

It shall be noted that the frame 1 is adapted to support a seat structure (not shown for simplicity) which is suitably padded for comfortable support of a baby.

The frame 1 defines such a linkage system as to allow the stroller to be folded from an open state, in which it is adapted to carry a baby, into a closed state, in which the frame 1 and the stroller have smaller dimensions, for easier transportation or storage.

In the illustrated example, the frame 1 advantageously allows both longitudinal and transverse umbrella-like closing motion, for the stroller to assume a very compact size in the folded state.

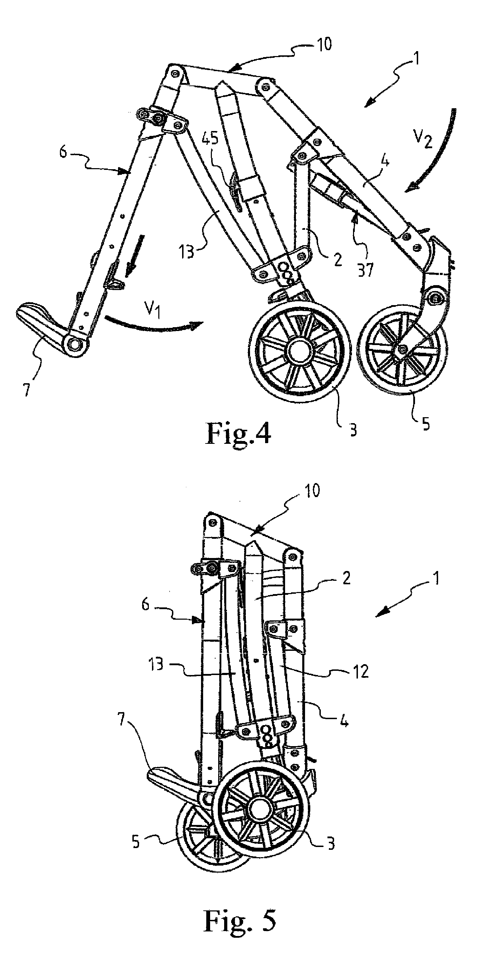

Figures 1, 2, 3 show the frame 1 with the stroller in the open state, and Figure 5 shows the frame 1 with the stroller in the closed state. Figure 4 shows the frame 1 in an intermediate step of longitudinal folding.

The frame 1 has disengageable lock means, that are adapted to be engaged or disengaged to lock the frame 1 in said open state and preferably, but not necessarily, in the closed state.

The frame 1 has two opposed side members which, with the stroller in the open state, extend lengthwise between a rear side and a front side, the rear side being defined as the side from which the stroller in the open state is pushed forward.

Each of these two side members of the frame 1 comprises:
- a rear bar 2 connected to at least one rear wheel 3;
- a front bar 4 connected to at least one front wheel 5 and
- a connecting bar 6 connected to handle means 7, that are used to push forward the stroller in the open state.

In this example, the frame 1 has two distinct front wheels 5 and two distinct rear wheels 3, which may either be twin wheels or have different diameters from each other and/or from those shown herein. As is known in the art, the front wheels 3 are of pivoting type and the rear wheels 3 have braking means that are adapted to be driven to lock the rotation of such wheels and prevent any motion of the stroller. Possibly, the braking means may be also operable on the front wheels.

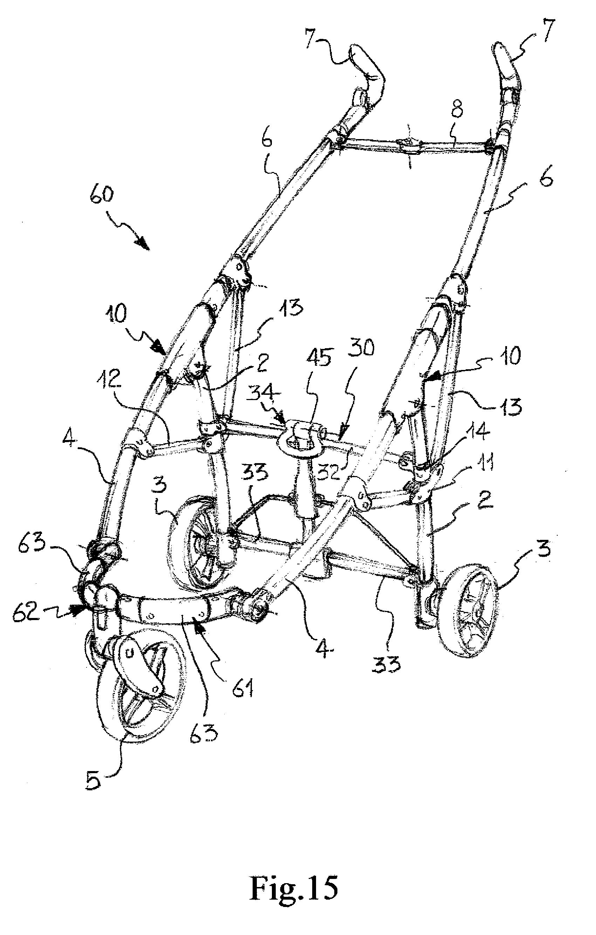

It should be noted that the frame 1 may also have a single front wheel 3, as shown in Figure 15.

In the embodiment as disclosed herein, the handle means 7 are embodied by two handles at the rear end of the connecting bar 6, handles or knobs of different designs being also usable, such as a handlebar.

As is known in the art, the handles 7 may be of articulated type, and can be folded and/or moved in different positions with respect to the connecting bars 6.

The connecting bars 6 are connected together by articulated crossbars 8.

The frame 1 also has one or more tilting arcs 9 for supporting a canopy.

In accordance with a preferred embodiment, the front bar 4, the rear bar 2 and the connecting bar 6 are tubular elements, preferably formed of aluminum, and have in this example an elliptical cross section, other structural members of different shapes being possibly used, such as bars of solid rectangular cross section.

Advantageously:
- each side member of the frame 1 has a central joint 10 with the respective rear bar 2, front bar 4 and connecting bar 6 connected thereto,
- each front bar 4 is articulated to its central joint 10 to pivot relative thereto towards its respective rear bar 2 as the stroller is closed from the open state (Figure 1) to the closed state (Figure 5) and
- each connecting bar 6 is articulated to its central joint 10 to pivot relative thereto towards its respective rear bar 2 as the stroller is closed from the open state (Figure 1) to the closed state (Figure 5).

With this structure, as the stroller is closed from the open state (Figure 1) to the closed state, the front bar 4 moves towards the rear bar 2 by pivoting in a direction (designated by arrow V2 in Figure 4) opposite to the direction in which the connecting bar 6 pivots towards the rear bar 2 (designated by arrow V1 in Figure 4). Accordingly, during such closing motion, the front bar 4 and the connecting bar 6 perform an umbrella-style closing motion relative to the rear bar 2.

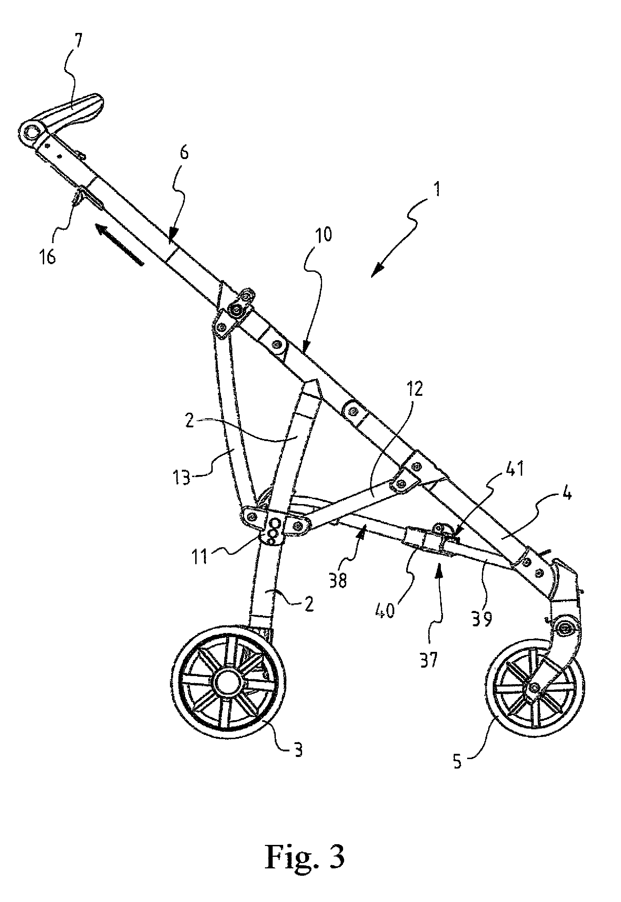

Referring to the rear bar 2, it shall be noted that, according to the preferred embodiment as shown herein, each rear bar:
- is integral to its respective central joint 10 and
- is connected and located relative to its central joint 10 in such a position as to be interposed between the front bar 4 and its respective connecting bar 6 when the stroller is in the closed state (Figure 5) and
- extends from its respective central joint in a substantially vertical direction when the stroller is in the open state (Figure 3).

Each central joint 10 has a body with opposed front and rear ends for articulation of the front bar 4 and the connecting bar 6 respectively.

In this example, the body of each central joint 10 defines a structural part that is designed to impart the required strength and stiffness to the frame 1. Particularly, each body comprises a specially shaped steel plate with a plastic cover associated therewith, possibly overmolded thereupon, for the central joint 10 to have a cross section substantially matching the cross section of the front bar 4 and the connecting bar 6. When the stroller is in the open state (figure 3), the front bar 4 and the connecting bar 6 substantially form extensions of the opposed front and rear ends of said body of the central joint 10.

The front bar 4 and the connecting bar 6 are articulated to the body of the central joint 10 to pivot relative to the latter about an axis of rotation that extends crosswise, the crosswise direction being defined as the direction perpendicular to the longitudinal direction, i.e. the horizontal direction extending from one side member to the other of the frame 1. Apparently, by changing the frame structure, the above defined umbrella-style motion of the front bar 4 and the connecting bar 6 relative to the rear bar 2 can be also performed using different arrangements for connection and articulation of the front bar 4 and the connecting bar 6 to the body of the central joint 10 other than the simple hinging arrangement as described herein.

As a whole, each rear bar 2 and the body of its respective central joint 10 substantially forms a T shape. As shown by Figure 3, the top stem of the T shape is not does not exactly form a 90° angle.

For easier opening and closing of the stroller frame 1 of the invention and for coordinated movements of the front bars 4 and the connecting bars 6, to ensure simultaneous motion during umbrella-style closing or opening motion:
- each rear bar 2 has a slider 11 slideably associated therewith, which is reversibly movable from a position remote from (Figure 5) and a position proximate to (Figure 3) the corresponding central joint 10 and
- the opposed ends of the slider 11 are respectively connected to the front bar 4 and the connecting bar 6 through a first connecting rod 12 and a second connecting rod 13 respectively.

It should be noted that the connecting rods 12 and 13 are hinged both to the slider 11 and to the front bar 4 and to the connecting bar 6 respectively by means of hinge connections whose axes of rotation extend in said crosswise direction.

The connection between the slider 11 and the rear bar 4, ensured by the first connecting rod 12 and the simultaneous connection between the slider 11 and the connecting bar 6 ensured by the second connecting rod 13 imposes a restraint between these parts of the frame 1, such that, as the slider 11 slides along its rear bar 2 from said proximate position (Figure 3) to said remote position (Figure 5) relative to it, the front bar and the connecting bar 6 are forced to simultaneously pivot towards the corresponding rear bar 2 and also ensure the simultaneous umbrella-style opening and closing motion as described above.

Advantageously, the slider 11 allows a slider-guide form fit with the rear bar 2 to be reversibly slideably guided thereby between said positions proximate to and remote from the central joint 10.

In this example, the slider 11 is embodied by a sleeve that is designed to be coaxially fitted onto the rear bar 2, which has abutment means 14 that act as a limit stop to the sliding motion of the slider 11 to its respective central joint 10. In this example, the above abutment means include a ring 14 that is integrally attached to the tubular element of the rear bar 2 at a predetermined distance from the central joint 10.

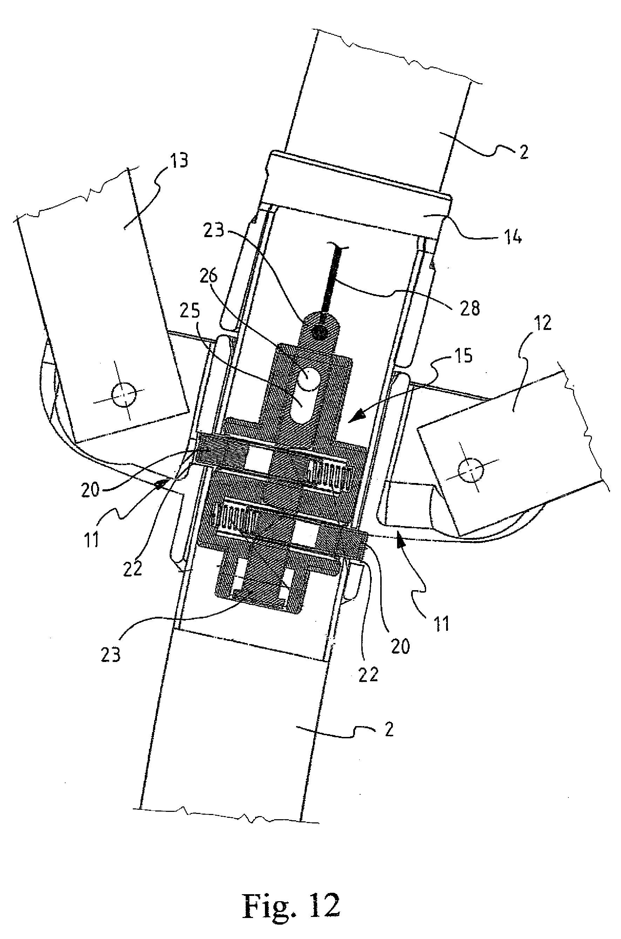

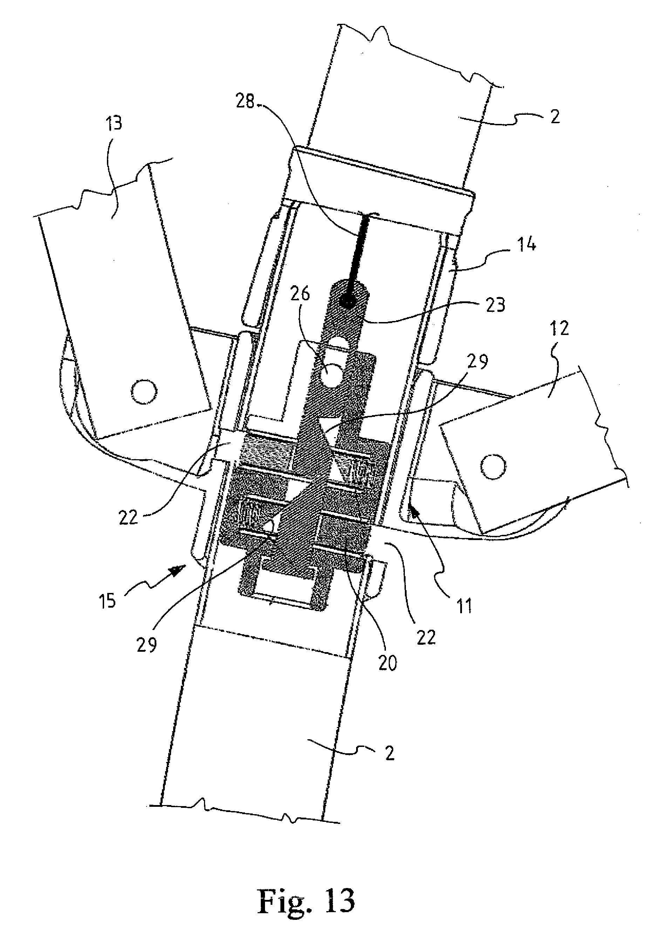

The frame 1 further comprises:
- lock means 15, releasably operable on at least one of the two sliders 11, preferably on both, to hold them in the above position towards the respective central joint 10, and
- drive means 16, located at said handle means 7 and operably associated to said lock means 15 for driving them from a locked position (Fig. 12) in which they interfere with the sliders to hold them in the above proximate position, to a position of non interference (Fig. 13), in which they do not interfere with the sliders 11, thereby allowing such sliders to reach said remote position.

Elastic means 18 maintain the lock means 15 in the above mentioned locked configuration (Fig. 12) with a predetermined elastic force (Fig. 12). This allows the lock means 15 driven from the locked configuration (Fig. 12) to the non-interference configuration (Fig. 13) by the drive means 16 to remain in the driven state as long as a stroller user operates on such drive means 16.

In accordance with the embodiment as shown in Figures 12, 13 and 14, these lock means 15 for the sliders 11 include a locking device that is coaxially housed in the tubular element of the rear bar 2 of each side member of the frame 1. Each device comprises a body 19 with two locking pins 20 projecting therefrom in a direction perpendicular to the axis of the tubular element of the rear bar 2. Preferably, the two locking pins 20 are offset from each other and from the longitudinal axis of the tubular element that defines the rear bar 2 and project from two opposite sides of such tubular element.

The rear bar 2 has apertures coincident with said locking pins 20, for the locking pins 20 to extend therethrough and only project to a sufficient extent as to engage a corresponding recess 22 formed in the slider 11, when the slider is in the above mentioned proximate position (Fig. 12).

Advantageously, the locking pins 20 are received in blind receptacles 21 extending crosswise within the body 20 to cross the longitudinal axis thereof.

The above mentioned elastic means 18 include a helical spring for each of these blind receptacles 21, which spring is designed to operate between the bottom of the blind receptacle 21 and its locking pin 20 to maintain such locking pin 20 in a partly overhanging position from the apertures of the rear bar 2.

Advantageously, the locking device 15 includes an actuator stem 23 which slideably fits in a longitudinal through housing 24 formed in the body 19 of the locking device. The actuator stem 23 slideably fits in the longitudinal housing 24 of the body 19 and is allowed to slide from a bottom limit position (Figure 12) to a top limit position (Figure 13). These limit positions are provided by the coupling relationship of a fixed pin 26 mounted to the body and a slot 25 of the actuator stem 23.

As shown in Figures 12, 13 and 14, the actuator stem 23 extends through apertures 27 formed in the locking pins. The actuator stem 23 extends through the locking pins 20 to prevent the locking pins 20 from coming completely out of the body 19 under the effect of the springs 18.

It shall be noted that the through apertures 27 of the locking pins 20 extend to a sufficient extent to allow such locking pins 20 to move from a state in which they are fully received in the body 19 to a state in which they project out of the body 19 by said predetermined end portion. In particular:
- when the actuator stem 23 is in the bottom limit position (Fig. 12), the locking pins 20 are pushed by the spring 18 and project out of the body 19 to the above mentioned predetermined extent, in this condition the actuator stem 23 acts as an abutment for each locking pin 20, and limits the projection extent of each locking element 20 from the body 19, whereas
- when the actuator stem 23 is in the top limit position (Fig. 13), such actuator 23 operates on the locking pins 20 to keep them in a backward position within the body 19 against the action of the springs 18.

The displacement of the locking pins 20 from the position in which they partially overhang from the body 19 (Fig. 12) to the backward position in the body 19 (Figure 13) occurs smoothly thanks to the form fit between the complementary inclined surfaces 29 of the contact portions of the actuator stem 23 and the walls of the locking pins 20 that delimit the through apertures 27, particularly the wall the delimits the end of the through apertures 27 closest to the spring 18.

Thanks to the above, the displacement of the actuator stem 23 from the bottom limit position (Fig. 12) to the top limit position (Fig. 13) causes the locking pins 20 to retract, thereby releasing the slider 11 that can move away from its central joint 20 to the above mentioned remote position (Figure 5).

Such displacement of the actuator stem 23 from the bottom limit position (Fig. 12) to the top limit position (Fig. 13) may be advantageously obtained by connecting said drive means 16 to the upper end of the actuator stem 23 using a cable 28. Thus, a pulling force exerted on the cable 28 through the drive means 16 will be directly transmitted to the actuator stem 23 that shall be forced to pass from the bottom limit position (Fig. 12), to the top limit position (Fig. 13).

It shall be noted that the motion of the actuator stem 23 back into the bottom limit position (Fig. 12) is ensured by the action of the springs 18 on the locking pins 20, as a result of the interaction between said inclined surfaces 29.

Referring to the above described lock means 15, it shall be noted that, in the preferred embodiment, each slider 11 is locked in the proximate position by two locking pins 20 operating on two opposite sides of the slider 11, although one locking pin or more than two locking pins may be provided for each slider.

Furthermore, the lock means may also differ from those described above, for example, a clip system can be used, in which one or two locking pins engage with a predetermined elastic force with the recesses of its respective slider, these locking pins being unlocked by directly operating on the ends of the locking pins. As a further alternative, a lock member may be used, such as a transverse pin or a cotter pin that can engage corresponding aligned holes of the slider and the tubular element defining the rear bar 2.

According to the illustrated preferred embodiment, the frame 1 defines a linkage system that, as mentioned above, allows the stroller to be also folded crosswise as it moves from the open state (Figures 1, 2, 3) to the closed state (Figure 5).

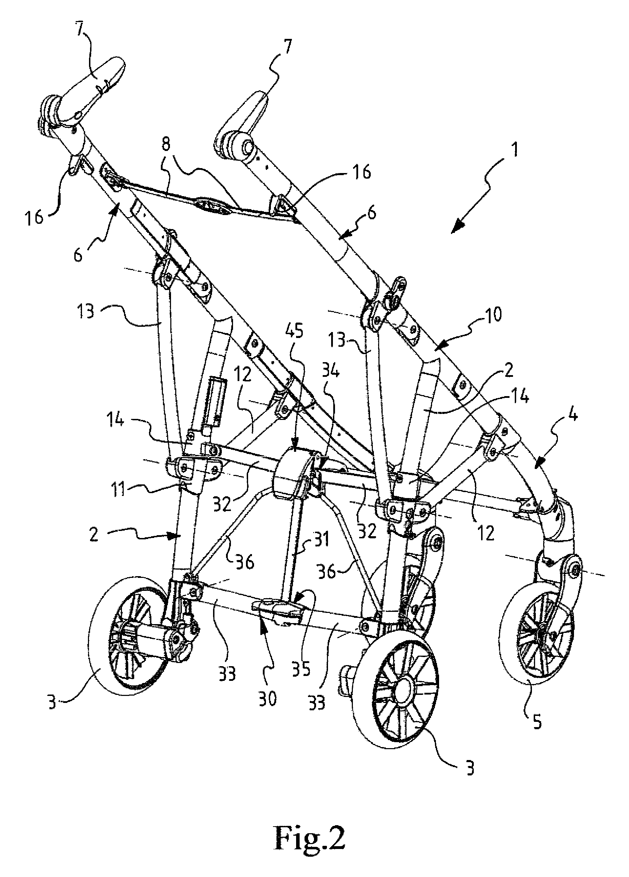

For this purpose, the opposed side members of the frame 1 are interconnected by a connecting linkage structure extending between the rear bars 2, designated as a whole by numeral 30. The linkage structure 30 is susceptible of turning from a deployed position (Figure 2), in which the rear bars 2 of the two side members are held apart from each other, to a retracted position, in which the connecting linkage structure 30 is folded and the rear bars are close together, thereby dramatically reducing the transverse dimension of the frame 1 of the stroller 1 in the closed configuration (Figure 5).

The connecting linkage structure 30 comprises a plurality of bars that are connected together in an articulated fashion by a plurality of joints, thereby defining a double four bar linkage, namely a double parallelogram linkage, extending between the opposed rear bars 2 of the two side members of the frame 1. These joints substantially define hinges with a hinge axis substantially extending in the longitudinal direction of the stroller.

The double parallelogram linkage 30 comprises:
- a central bar 31 articulatingly connected to the opposed rear bars 2 via respective upper arms 32 and lower arms 33;
- an upper central joint 34 for articulatingly connecting the upper end of the central bar 31 with a respective end of the upper arms 32;
- a lower central joint 35 for articulatingly connecting the lower end of the central bar 31 with a respective end of the lower arms 33 and
- struts 36, when needed.

Locking means are operably associated to the double parallelogram linkage, for maintaining the double parallelogram linkage 30 in the above mentioned deployed position (Figure 2). In the present embodiment, these locking means are associated with the upper central joint 34.

Advantageously, the linkage structure 30 defined by the double parallelogram linkage is operably connected with the front bar 4 of each side member of the frame 1 via stiffening means, including a articulated fork structure 37.

The articulated fork structure 37 comprises a connector member 38 and two articulated arms 39 and is adapted to ensure the required structural stiffness between the two side members of the frame 1 at the front end of the frame 1.

According to the preferred embodiment as shown in the figures, when the stroller is in the open state (Figure 1), the articulated fork structure 37 has a regular Y shape, in which the connector member 38 extends from the upper joint 34 along the median longitudinal axis of the frame 1. The connector element 38 is connected to the upper joint 34 by its rear end.

The articulated arms 39 of the articulated fork structure 37 are hinged to the front end of the connector element 38 and to respective front bars 4 via hinge connections allowing for relative pivotal motion about substantially vertical hinge axes, i.e. extending perpendicular to the surface on which the stroller wheels lie when the stroller is in the open state as shown in Figure 1.

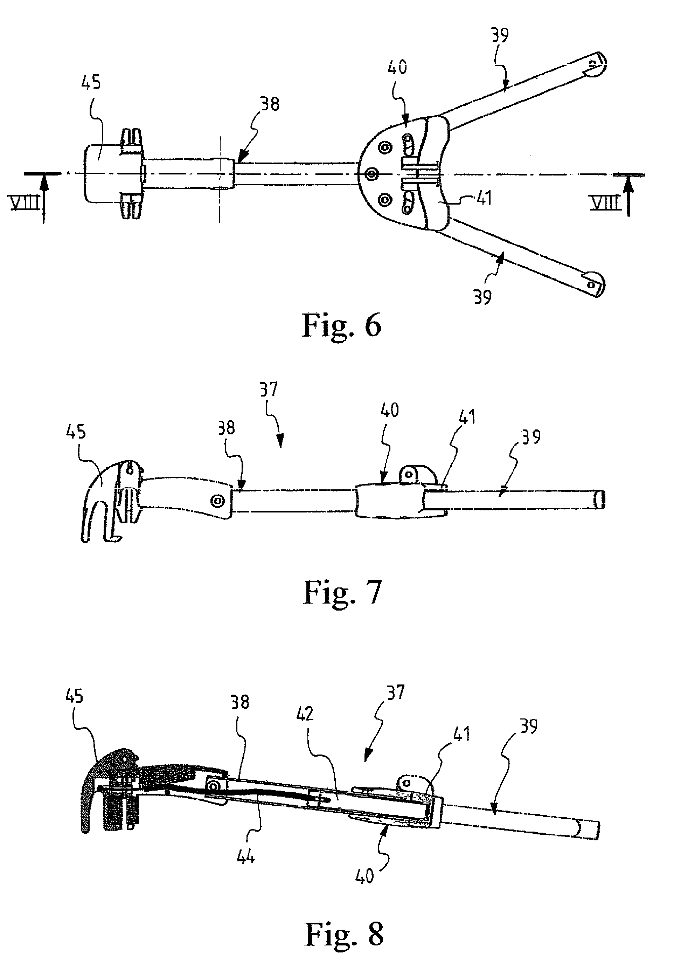

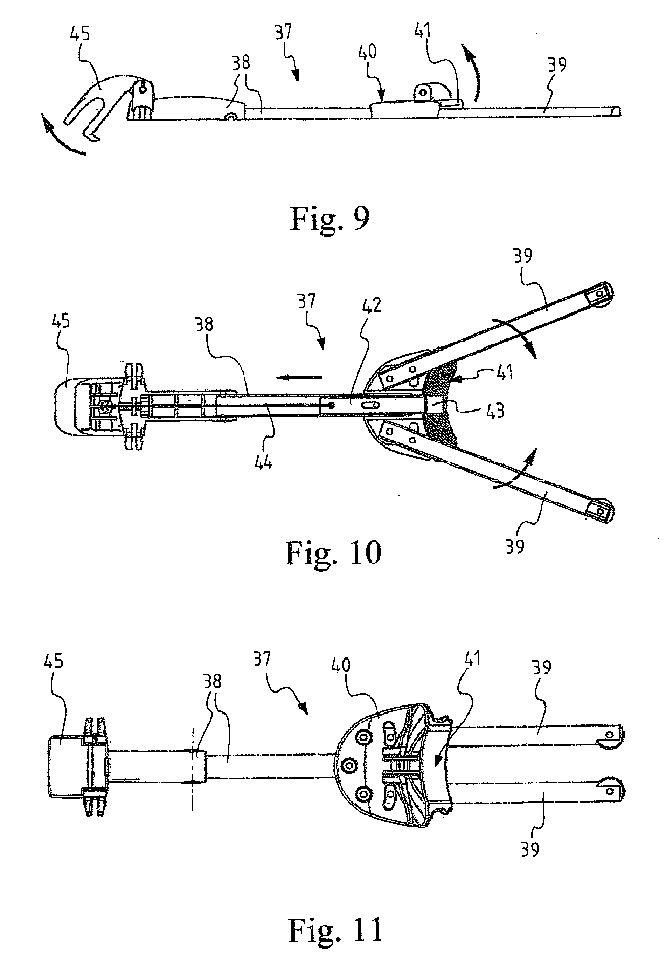

Due to the articulation existing between such proximal end of the articulated arms 39 and the connector element 38, the articulated fork structure 37 is susceptible of turning from an open fork state (Figures 1 and 6) to a closed fork state (Figure 11) and vice versa, in which the distal ends of the articulated arms 39 are remote from ad proximate to each other respectively. As shown in Figure 6, in the open fork state, the articulated arms 39 are open apart and the articulated fork structure 37 has the above mentioned regular T-shape. However, as shown in Figure 11, in the above mentioned closed fork state, the articulated arms 39 are substantially parallel and the articulated fork structure 37 has a tuning-fork shape.

Accordingly, as the double parallelogram linkage 30 turns from the deployed position to the retracted position, the articulated fork structure 37 may conveniently turn from the open fork state to the closed fork state, thereby reducing the transverse dimension of the front of the frame 1. Therefore, when the stroller is in the closed state (Figure 5), the two side members of the frame 1 are close together throughout their extension, which dramatically reduces the overall transverse dimension of the closed-state stroller.

The connector member 38 of the articulated fork structure 37 has a box-like structure 40 at its front end, for the articulated arms 39 to be inserted therein, to be connected thereto in a hinge-like fashion, as described above. Also, the box-like member 40 allows to determine the pivoting travel of both articulated arms 39.

Advantageously, the articulated fork structure 37 comprises:
- locking means 41 operably associated to the articulated fork structure 37 to reversibly move from a locked state to a released state, in which such locking means 41 prevent and allow respectively the transition of the articulated fork structure 37 from the open fork state (Figures 6, 7, 8) to the closed fork state (Figure 11), and
- retainer means operable on said locking means 41 to allow the transition from the locked condition to the released condition.

In this example, the locking means 41 are embodied by a spacer element which is articulatingly supported by the box-like member 40 at the front end thereof, to pivot relative to the box-like member 40 from a locked state (Figures 6, 7, 8), in which said spacer element 41 is interposed between said articulated arms 39 preventing their distal ends from coming close to each other, to a released state (Figure 11), in which said spacer element 41 is not interposed between the articulated arms 39 of the articulated fork structure 37 and the distal ends of the articulated arms 39 may be pivoted towards each other, thereby moving the articulated fork structure 37 to the closed fork state (Figure 11).

In the present example, the retainer means operable on said locking means 41 include a retainer pin 42 slideably supported by the connector member 38 of the articulated fork structure 37 to move from a forward condition (Figure 8) to a backward condition (Figure 10).

When the spacer element 41 is situated between the two articulated arms 39 of the articulated fork structure 37, this retainer pin 42 in the forward condition engages a corresponding recess 43 of the spacer element 41, thereby locking the spacer element 41 in the locking condition (Figure 8). However, when the retainer pin 42 is in said backward condition (Figure 10), it does not engage the recess 42 and the spacer element 41 is free to move to the released state (Figure 11), in which said spacer element 41 is not interposed between the articulated arms 39 of the articulated fork structure 37.

The retainer pin 42 slideably supported by the connector member 38 of the articulated fork structure 37 may be advantageously driven from the forward position to the backward position and vice versa via transmission means 44 connected to a drive lever 45.

In this example, the drive lever 45 is supported at an upper central joint 34 of the double parallelogram linkage 30, whereas the transmission means 44 include a rigid cable, although a Bowden cable or a leverage system, preferably of flexible type, may be also used.

Depending on the transmission means 44 that have been selected, elastic means may be also provided, for maintaining the locking means 41 in said forward position.

It shall be noted that the connector member 38 of the articulated fork structure 37 may also have such a structure as to allow recovery of length changes, such as a telescopic structure or an articulated structure, e.g. of toggle joint type.

It shall be noted that the front bars 2 of the opposed side members of the frame 1 may also not be separated, but connected at their distal ends by their respective central joint 10. In this case, there may be provided either two opposed front wheels at the sides, or one front wheel, located at the center, along the median longitudinal axis of the stroller.

During operation of a stroller having a frame 1 as described above, the motion from the open state (Figures 1, 2 and 3) to the closed state (Figure 5) is obtained by unlocking both the locking means that operate on the double parallelogram linkage structure 30 and the drive means 16 located at said handle means 7, to move the lock means 15 into the position of non interference (Fig. 13) with the sliders 11.

Now, the structure of the frame 1 may be collapsed in the direction of arrows V1 and V2, for umbrella-style folding motion of the connecting bar 6 and the front bar 2 relative to the rear bar 2, as described before.

Then, by simple transverse operation on the structure of the frame 1, the two opposed side members can be moved towards each other to reach the state of the frame 1 as shown in Figure 5. This latter step completes the folding motion as described above, to move the double parallelogram linkage from the deployed position (Figure 2) to the retracted position while moving the articulated fork structure 37 from the open state (Figures 1 to 6) to the closed state (Figure 11).

An opposite motion will turn the frame 1 from the closed state (Figure 5) to the open state (Figure 1, 2 and 3).

Referring to Figure 15, numeral 60 generally designates a second embodiment of the frame of the present invention. The parts of the frame 60 that are structurally and/or functionally equivalent to those of the frame 1 described hereinbefore will be designated by the same numerals and will not be further described.

The frame 60 substantially differs from the frame 1 in that, with reference to the front bars 4 of each side member of the frame 60, the ends thereof distal from their respective central joint 10 are interconnected by a front linkage structure 61 comprising a front joint 62 located at the center. The front linkage structure 61 is designed to allow a crosswise motion of the opposed side members of the frame 60 towards each other also near the ends distal from the central joint 10 of the front rods 4, as the stroller is being closed.

Particularly, the front linkage structure 61 comprises two front rods 63 having a first end connected to said front joint 62, to pivot relative thereto about a vertical axis of rotation, and the other end connected to the distal end of a corresponding front bar 4, to rotate relative thereto about a crosswise axis of rotation.

It will be appreciated that the structure of the frame 60 does not require stiffening means, including the articulated fork structure 37, because the required structural stiffness of the front part of the frame 60 is ensured by the provision of the front linkage structure 61 for connecting the opposed distal ends of the front bars 4.

The remaining structural and/or functional features of the frame 60 are equivalent to those of the frame 1 as described above.

As clearly shown in the above description, the foldable stroller of the present invention fulfills the above mentioned need and also obviates prior art drawbacks as set out in the introduction of this disclosure. It can be folded in a very simple and quick manner and affords a dramatic reduction of the stroller dimensions in both lengthwise and crosswise directions.

Those skilled in the art will obviously appreciate that a number of changes and variants may be made to the foldable stroller as described hereinbefore, without departure from the scope of the invention, as defined in the following claims.

Thus, for example, changes may be made to the frame structure of the invention, such that the rear bar, the front bar and/or the connecting bar are not directly connected to the rear wheels, the front wheels and the handles respectively, but additional transmission bars or other means are used for connection thereof.

## Claims

1. A foldable stroller comprising a loadbearing frame (1; 60) for supporting a seat structure, wherein said frame (1; 60) defines a linkage system that allows the stroller to be folded lengthwise from an open state to a closed state, wherein said frame (1; 60) comprises releasable lock means which are adapted to operate on said linkage system to lock said frame (1; 60) in the open state and comprises two opposed side members, each comprising:
- a rear bar (2) connected to at least one rear wheel;
- a front bar (4) connected to at least one front wheel (3);
- a connecting bar (6) connected to handle means (7), that are used to push forward the stroller in the open state,
**characterized in that**:
- each side member of the frame (1; 60) has a central joint (10) with the respective rear bar (2), front bar (4) and connecting bar (6) connected thereto,
- each front bar (4) is articulated to its central joint (10) to pivot relative thereto with a pivotal motion (V2) towards its respective rear bar (2) as the stroller is closed from the open state to the closed state;
- each connecting bar (6) is articulated to its central joint (10) to pivot relative thereto with a pivotal motion (V1) towards its respective rear bar (2) as the stroller is closed from the open state to the closed state;
- during the closing motion that turns the stroller from the open state to the closed state, the pivotal motion (V2) of said front bar (4) towards said rear bar (2) having a direction of rotation opposite to the direction of said pivotal motion (V1) of said connecting bar (6) towards said rear bar (2) wherefore, during said closing motion, said front bar (4) and said connecting bar (6) pivot relative to said rear bar (2) to effect an umbrella-like closing motion.

2. A foldable stroller as claimed in claim 1, wherein each rear bar (2) is connected relative to its central joint (10) in such a position as to be interposed between its respective front bar (4) and its respective connecting bar (6) when said stroller is in the closed state.

3. A foldable stroller as claimed in claim 1 or 2, wherein said front bar (4) and said connecting bar (6) of a respective central joint (10) substantially form extensions of each other when the stroller is in the open state.

4. A foldable stroller as claimed in any one of claims 1 to 3, wherein said rear bar (2) is integral with its central joint (10).

5. A foldable stroller as claimed in any one of claims 1 to 4, wherein said rear bar (2) extends in a substantially vertical direction when said stroller is in the open state.

6. A foldable stroller as claimed in any one of claims 1 to 5, wherein each central joint (10) has a body with opposed front and rear ends for articulation of the front bar (4) and the connecting bar (6) respectively.

7. A foldable stroller as claimed in claim 6, wherein each central joint (10) substantially forms a T shape with its respective rear bar (2).

8. A foldable stroller as claimed in any one of claims 1 to 7, wherein said front bar (4) and said connecting bar (6) extend from their respective central joint (10) to substantially form extensions of each other towards the front and the back of the stroller, when the stroller is in the open state.

9. A foldable stroller as claimed in any one of claims 1 to 8, wherein:
- each rear bar (2) has a slider (11) slideably associated therewith, which is reversibly movable from a position remote from and a position proximate to the corresponding central joint (10) and
- the opposed ends of said slider (11) are respectively connected to said front bar (4) and to said connecting bar (6) through a first connecting rod (12) and a second connecting rod (13) respectively,
wherefore, as said slider slides along its rear bar (2) from said proximate position to said remote position, the front bar (4) and the connecting bar (6) are simultaneously forced to pivot towards the corresponding rear bar (2) and vice versa.

10. A foldable stroller as claimed in claim 9, wherein said slider (11) provides a form fit with said rear bar (2), to be reversibly slideably guided thereby along said rear bar (2) between said proximate and remote positions.

11. A foldable stroller as claimed in claim 10, wherein said slider is a sleeve (11) that is coaxially fitted onto said rear bar (2).

12. A foldable stroller as claimed in any one of claims 9 to 11, comprising abutment means (14) for providing a limit stop for the sliding motion of each movable slider towards its central joint (10).

13. A foldable stroller as claimed in any one of claims 9 to 12, comprising:
- lock means (15) for releasably interfering with said sliders (11) to hold them in the position proximate to their respective central joint (10) and
- drive means (16) located at said handle means (7) and operably associated with said lock means (15) for unlocking said lock means (15).

14. A foldable stroller as claimed in claim 13, comprising elastic means (18) for operating on said lock means (15) for maintaining them with a predetermined elastic force in a condition of interference with said sliders (11) towards their respective central joint (10).

15. A foldable stroller as claimed in any one of claims 1 to 14, wherein said front bar (4), said rear bar (2) and said connecting bar (6) are tubular elements.

16. A foldable stroller as claimed in any one of claims 1 to 15, wherein said front bars (4) of the two opposed side members of said frame (1; 60) are connected in articulated manner (61) at their end distal from said central joint (10).

17. A foldable stroller as claimed in any one of claims 1 to 16, wherein said frame (1; 60) defines a linkage system that allows the stroller to be also folded crosswise as it moves from the open state to the closed state, wherein:
- the opposed side members of said frame (1) are interconnected by a connecting linkage structure (30) extending between said rear bars (2), which is adapted to turn from a deployed position, in which the rear bars (2) of the two side members are held apart from each other, when said stroller is in the open state, to a retracted position, in which the connecting linkage structure (30) is folded for said rear bars (2) of the two side members to be moved towards each other when said stroller is in the closed state and
- said connecting linkage structure (30) is operably connected to the front rod (4) of each side member of the frame (1) by stiffening means comprising an articulated fork structure (37) which is adapted to ensure the required structural stiffness between the opposed front ends of the side members of the frame (1).

18. A foldable stroller as claimed in claim 17, wherein said connecting linkage structure (30) extending between said rear bars of the two side members comprises a plurality of crossbars (32, 33) that form a double four-bar linkage between said rear bars (2), said crossbars being articulated together at a plurality of joints (34, 35).

19. A foldable stroller as claimed in claim 18, wherein said double four bar linkage is a double parallelogram linkage (30).

20. A foldable stroller as claimed in any one of claims 17 to 19, wherein:
- said articulated fork structure (37) comprises a connector member (38) and two articulated arms (39) which have a proximal end articulatingly connected to a first end of said connector member (38) and a respective distal end articulatingly connected to a respective front bar (4) of said frame (1) and
- said connector member (38) being interconnected with said connecting linkage structure (30) that extends between said rear bars (2),
wherefore, as said connecting linkage structure (30) between said rear bars (2) turns from the deployed position to the retracted position, said articulated fork structure (37) can turn from an open fork state to a closed fork state and vice versa, in which the distal ends of said articulated arms (39) are remote from ad proximate to each other respectively.

21. A foldable stroller as claimed in claim 18 and claim 20, wherein said connector member is interconnected with a joint (34) of said double parallelogram linkage (30).

22. A foldable stroller as claimed in claim 21 and claim 20, wherein said connector member is interconnected with an upper central joint (34) of said double parallelogram linkage (30).

23. A foldable stroller as claimed in any one of claims 20 to 22, comprising:
- locking means (41) operably associated to said articulated fork structure (37) to reversibly move from a locked state to a released state, in which said locking means (41) prevent and allow respectively the transition of said articulated fork structure (37) from the open fork state to the closed fork state and
- retainer means (41) operable on said locking means (41) to allow or prevent the transition from the locked condition to the released condition.

24. A foldable stroller as claimed in claim 23, wherein:
- said locking means include a spacer element (41) which is articulatingly supported by said connector member (38, 40) to move from the locked state, in which said spacer is interposed between said articulated arms (39), thereby preventing their distal ends from coming close to each other, to a released state, in which said spacer (41) is not interposed between said articulated arms (39), thereby allowing their distal ends to come close to each other,
- said retainer means comprise a retainer pin (42) slideably supported by said connector member (38) to move from a forward position, in which it engages a corresponding recess (43) of said spacer element (41) in a locked state, thereby locking it in this state, to a backward position, in which said retainer pin (42) does not engage said spacer element (41), which is thus free to move to the released state and
- said retainer pin (42) being adapted to be driven from the forward position to the backward position, and vice versa, by transmission means (44) connected to a drive lever (45).
